# EUROPÄISCHE PATENTSCHRIFT

(11) **EP 1 449 586 B1**
(45) Veröffentlichungstag und Bekanntmachung des Hinweises auf die Patenterteilung: **07.06.2006**
(21) Anmeldenummer: 04002628.8
(22) Anmeldetag: 06.02.2004
(51) Int. Cl.: B01L 3/02

(54) **Dosiersystem mit Speicher und Verfahren zum Betreiben eines Dosiersystems**
Dosing system with memory and method of using same
Système de dosage avec mémoire et méthode pour l'utilisation

(30) Priorität: 20.02.2003 DE 10307030
(43) Veröffentlichungstag der Anmeldung: 25.08.2004
(73) Patentinhaber: EPPENDORF AG, 22339 Hamburg (DE)
(72) Erfinder: Wilmer, Jens, 22926 Ahrensburg (DE); Rothhoff, Rainer, 22145 Hamburg (DE)
(74) Vertreter: Hauck, Graalfs, Wehnert, Döring, Siemons

(56) Entgegenhaltungen:
- EP-A- 0 086 029
- EP-A- 0 869 663
- EP-A- 0 994 350
- EP-A- 0 999 432
- EP-A- 1 103 793
- WO-A-02/078595
- DE-A- 19 735 931
- US-A- 5 852 590

## Beschreibung

Die Erfindung bezieht sich auf ein Dosiersystem mit mindestens einem Werkzeug und einer Dosiervorrichtung und auf ein Verfahren zum Betreiben eines Dosiersystems mit mindestens einem Werkzeug und einer Dosiervorrichtung

Dosiersysteme im Sinne dieser Anmeldung umfassen manuell oder motorisch betriebene Pipetten oder Dispenser in tragbarer oder stationärer Ausführung, Dosierautomaten (LHS = Liquid Handling Stations) und Laborautomaten (WS = Work Stations). Diese Dosiersysteme umfassen mindestens ein Werkzeug und eine Dosiervorrichtung. Das Werkzeug ist vielfach ein Dosierwerkzeug, z.B. eine Pipettenspitze, eine Spritze oder ein Dosierkopf mit mindestens einem Sitz zum Befestigen mindestens einer Pipettenspitze oder Spritze oder mit einer oder mehreren integrierten Dosiernadeln. Die Dosiervorrichtung weist eine Einrichtung zum lösbaren Befestigen des Werkzeuges, eine Einrichtung zum Betätigen des Werkzeuges sowie eine Einrichtung zum Steuern der vorerwähnten Einrichtungen auf. Die Einrichtung zum Betätigen umfaßt z.B. mindestens eine Kolben-Zylindereinrichtung zum Verschieben einer Luftsäule in der Pipettenspitze. Sie kann aber auch eine Einrichtung zum mechanischen Betätigen mindestens einer Kolben-Zylindereinrichtung sein, die in einem Dosierwerkzeug integriert ist, z. B. in eine Spritze oder in einen Dosierkopf.

Gemäß deutscher Patentanmeldung 102 47 731.0 ist ein herkömmlicher Werkzeughalter von Laborautomaten mit einem Greifwerkzeug für die Handhabung von Laborgefäßen, Deckeln von Gefäßen und anderen Gegenständen einsetzbar. Die Erfindung bezieht Dosiersysteme mit einem Greifwerkzeug gemäß deutscher Patentanmeldung 102 47 731.0 ein.

Bei der Herstellung der Werkzeuge fallen Daten an, die insbesondere den Auftrag, die individuelle Produktnummer und das Herstellungsdatum umfassen. Des weiteren fallen beim Hersteller Kalibrierdaten an. Es handelt sich hierbei z.B. um Volumenkorrekturdaten zur individuellen Kalibrierung von Dosierwerkzeugen. Ferner handelt es sich hierbei z.B. um individuelle mechanische Korrekturdaten, die z.B. eine Fehlausrichtung eines Dosier- oder Greifwerkzeuges bezüglich seines Sitzes in der Dosiervorrichtung betreffen.

Ferner können beim Anwender Daten des Werkzeuges anfallen. Hierbei handelt es sich z.B. um Idenfikationsdaten, Kalibrierdaten oder die Benutzung (z.B. Anzahl oder Art der Benutzungen) betreffende Daten.

Bislang werden die produktionsbezogenen Daten in Begleitdokumenten des Werkzeuges festgehalten bzw. beim Hersteller archiviert. Zum Teil sind sie nur durch Auskunft des Herstellers zugänglich.

Die anwendungsbezogenen Daten werden herkömmlicherweise vom Anwender in Begleitdokumenten festgehalten. Die bisherige Handhabung der Daten hat den Nachteil, daß die Zuordnung der Daten zu den Werkzeugen sowie deren Aktualisierung und Ergänzung umständlich ist und die Daten nicht immer ohne weiteres zur Verfügung stehen. So müssen beispielsweise Daten der Kalibrierung mühselig in einen Laborautomaten eingegeben werden.

Aus der US 5 139 744 ist ein Laborautomat mit einem Erkennungssystem für austauschbare Dosiermodule bekannt. Die Dosiermodule haben ein nicht-digitales, elektronisches Netzwerkelement, das als RC-Glied zur Verstimmung eines Schwingkreises ausgeführt ist. Zur Erkennung soll eine Pulsweitenänderung gemessen werden. Mit Hilfe des RC-Gliedes ist praktisch nur eine dauerhafte Zuordnung einer einzigen Information zu einem Dosierwerkzeug möglich. Dementsprechend ist eine Verwendung für die Identifizierung des Dosierwerkzeuges angegeben.

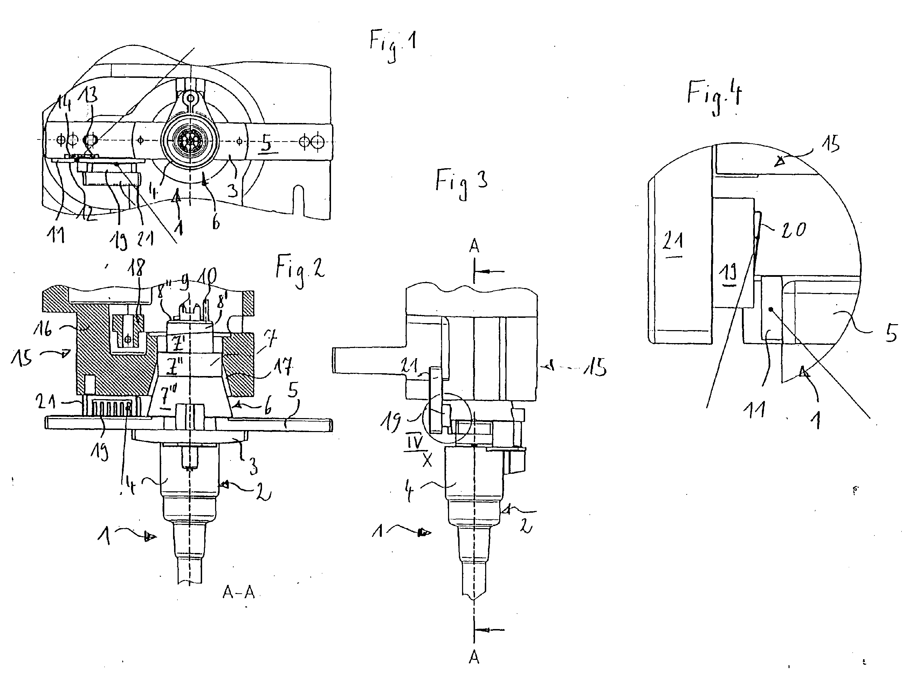

Die DE 101 17 064 A1 beschreibt eine Vorrichtung zum automatischen Dispensieren, die gemäß Fig. 1 eine Patrone mit einem Tank, einem Mikrodosierelement und einer Klemmvorrichtung umfaßt. Gemäß Fig. 2 wird die Patrone über die Klemmvorrichtung an einer Klemmechanik eines Montagekopfes befestigt. Der solchermaßen gebildete Dispensierkopf ist gemäß Fig. 3, 4 auf einem Dispensierkopfträger befestigt. Der Dispensierkopf ist in Z-Richtung (ggf. zusätzlich in der X-Y-Ebene) zu einem Objektträger verfahrbar, der in einer X-Y-Ebene bewegbar ist. Die Patronen sind mit einem elektrisch auslesbaren Code versehen, der z. B. in einem EEPROM, HF-tag, Barcode und dergleichen gespeichert ist. Der Code kann Fluid- z. B. patronenspezifische Daten, wie beispielsweise Substanzidentifizierung, Lösungsmittelidentifizierung, Fülldatum, Alterung, Reinheit und dergleichen enthalten. Diese Daten können direkt der Versuchsplanung zugeführt werden, so daß stets ein optimaler Einsatz bzw. Verfügbarkeit von Substanzen gewährleistet ist. Bei einem Patronenwechsel muß somit aufgrund patronenspezifischer Daten die zu bestückende Position nicht vom Bediener mitgeteilt werden, weil das System dies automatisch erkennen kann.

Die WO 01/62322 A1 bezieht sich auf ein mikroelektronisches Inhalationsgerät zur Verabreichung von Aerosolen. Ein Aerosolbehälter ist mit einem mikroelektronischen Speicherelement versehen. Der Behälter ist in eine Aufnahme einsetzbar, die eine Mikroelektronikanordnung aufweist. Wenn der Behälter in der Aufnahme eingesetzt ist, werden in dem Speicherelement gespeicherte Informationen in einem Display der Mikroelektronikanordnung angezeigt.

Die WO 01/62322 A1 offenbart einen ähnlichen Medikamentendispenser, bei dem der Behälter oder die Aufnahme mit einem RFID ausgestattet ist.

Die DE 38 83 267 T2 bezieht sich auf ein Artikelidentifikationssystem mit einer ID-Vorrichtung, welches an einem zu identifizierenden Artikel anbringbar ist und einem Lesesteuergerät für ein Lesen von Daten aus der ID-Vorrichtung. Das Artikelidentifikationssystem dient der Verwaltung von Werkzeugen einer Werkzeugmaschine oder von Teilen oder Produkten in einer Fabrik oder zur Identifikation von Artikeln in einem Verteilungs- oder Auslieferungssystem oder dergleichen.

Davon ausgehend liegt der Erfindung die Aufgabe zugrunde, ein Dosiersystem mit einem Werkzeug und einer Dosiervorrichtung und ein Verfahren zum Betreiben eines Dosiersystems mit einem Werkzeug und einer Dosiervorrichtung zu schaffen, bei dem die Handhabung von Daten des Werkzeuges vereinfacht ist.

Die Aufgabe wird durch ein Dosiersystem mit den Merkmalen des Anspruches 1 und durch ein Verfahren mit den Merkmalen des Anspruchs 8 gelöst. Vorteilhafte Ausgestaltungen des Dosiersystemes sind in den Unteransprüchen angegeben.

Das erfindungsgemäße Dosiersystem hat
- mindestens ein Werkzeug,
- eine am Werkzeug angeordnete programmierbare elektronische Speichereinrichtung,
- eine Dosiervorrichtung mit einer Einrichtung zum lösbaren Befestigen des Werkzeuges, einer Einrichtung zum Betätigen des Werkzeuges und einer Einrichtung zum Steuern der Einrichtung zum Betätigen des Werkzeuges und/oder der Einrichtung zum lösbaren Befestigen und
- eine mit der Einrichtung zum Steuern verbundene, an der Dosiervorrichtung angeordnete Einrichtung zum Kontaktieren und eine am Werkzeug angeordnete weitere Einrichtung zum Kontaktieren, die mit der programmierbaren elektronischen Speichereinrichtung verbunden ist, wobei die Einrichtung zum Kontaktieren und die weitere Einrichtung zum Kontaktieren bei lösbar an der Dosiervorrichtung befestigtem Werkzeug einander kontaktieren.

Bei der Herstellung des Werkzeuges des erfindungsgemäßen Dosiersystemes können produktionsbezogene Daten einfach während des Produktionsprozesses in die programmierbare elektronische Speichereinrichtung eingeschrieben und damit dokumentiert und direkt am Werkzeug mitgeführt werden. Insbesondere können fertigungsseitige Qualitätsprüfungsdaten zur Kalibrierung der Werkzeuge und mechanische Korrekturdaten gespeichert werden. Entsprechend sind anwendungsbezogene Daten bei der Anwendung einfach einschreibbar und damit direkt am Werkzeug dokumentierbar. Die eindeutige und unmittelbare Zuordnung und einfache Zugänglichkeit der produktionsbezogenen bzw. anwendungsbezogenen Daten ist beim gesamten Produktionsprozeß bzw. bei der Anwendung sichergestellt. Die in der programmierbaren elektronischen Speichereinrichtung gespeicherten Daten werden von der Einrichtung zum Steuern beim Steuern der Einrichtung zum Betätigen und/oder der Einrichtung zum lösbaren Befestigen berücksichtigt. Vorzugsweise werden Kalibrierdaten bzw. mechanische Korrekturdaten bei der Anwendung eines Werkzeuges, beispielsweise in Laborautomaten, automatisch ausgelesen und beim Betrieb des Dosiersystems berücksichtigt. Spätere Korrekturen der Kalibrierdaten und mechanischen Korrekturdaten nach Service- oder Routineprüfung bzw. beim Anwender sind möglich.

Die Einrichtung zum lösbaren Befestigen dient der lösbaren Befestigung des Werkzeuges an der Dosiervorrichtung.

Die Einrichtung zum Kontaktieren dient dazu, die weitere Einrichtung zum Kontaktieren elektrisch zu kontaktieren, wenn das Werkzeug lösbar an der Dosiervorrichtung befestigt ist. Über die Einrichtung zum Kontaktieren und die weitere Einrichtung zum Kontaktieren sind die Einrichtung zum Steuern und die programmierbare elektronische Speichereinrichtung elektrisch miteinander verbunden, wenn das Werkzeug lösbar an der Dosiervorrichtung befestigt ist.

Somit erfolgt die Datenübertragung zwischen programmierbarer elektronischer Speichereinrichtung und der Einrichtung zum Steuern über die Einrichtungen zum Kontaktieren. Über diese Einrichtungen kann auch das Einschreiben von produktionsbezogenen bzw. anwendungsbezogenen Daten erfolgen. Bei der Herstellung kann das Einschreiben über geeignete elektronische Datenverarbeitungssysteme erfolgen. Dies gilt auch für die Anwendung. Beim Anwender kann das Einschreiben aber auch über die Einrichtung zum Steuern geschehen.

Das Dosiersystem kann in unterschiedlicher Weise ausgeführt sein. Gemäß einer Ausgestaltung ist das Dosiersystem eine Pipette und/oder ein Dispenser oder eine Dosierstation (ggf. umfassend eine Pipette und/oder einen Dispenser) oder ein Laborautomat (ggf. umfassend eine Pipette und/oder einen Dispenser) und/oder ist mindestens ein Werkzeug eine Pipettenspitze und/oder eine Spritze und/oder ein Dosierkopf und/oder ein anderes Dosierwerkzeug und/oder ein Greifwerkzeug. Der Dosierkopf hat z. B. eine oder mehrere Verdrängungseinrichtungen für eine oder mehrere Pipettenspitzen oder ein Getriebe für eine oder mehrere Spritzen. Die Verdrängungseinrichtung bzw. die mehreren Verdrängungseinrichtungen bzw. das Getriebe ist von der Einrichtung zum Betätigen der Dosiervorrichtung betätigbar, wenn der Dosierkopf an der Dosiervorrichtung befestigt ist.

Gemäß einer Ausgestaltung ist die Einrichtung zum Kontaktieren eine Federkontaktleiste und die weitere Einrichtung zum Kontaktieren eine Kontaktleiste. Hierdurch kann unter Laborbedingungen eine sichere Kontaktierung gewährleistet werden. Mittels Federkontaktleiste und Kontaktleiste ist mit geringem Aufwand eine programmierbare elektronische Speichereinrichtung mit mindestens einem üblichen elektronischen Halbleiterspeicherbaustein mit der Einrichtung zum Steuern verbindbar. Die Federkontaktleiste und die Kontaktleiste haben einen vorteilhaften Selbstreinigungseffekt. Gemäß einer Ausgestaltung ist die Kontaktleiste eine Platine mit parallelen Leiterbahnen, welche die Kontakte bilden. Gemäß einer Ausgestaltung sind die Federkontakte der Federkontaktleiste und/oder die Leiterbahnen der Kontaktleiste vergoldet, um eine einwandfreie Kontaktierung über eine Vielzahl Zyklen zu erreichen.

Gemäß einer Ausgestaltung weisen die Einrichtungen zum Kontaktieren und die weitere Einrichtung zum Kontaktieren zusätzlich zu den Kontakten für die Datenübertragung Kontakte für eine Stromversorgung auf. Diese Kontakte können insbesondere mit der programmierbaren elektronischen Speichereinrichtung verbunden sein, oder mit einer Antriebseinrichtung eines Dosier- oder Greifwerkzeuges, um die besagten Einrichtungen mit Strom zu versorgen.

Gemäß einer Ausgestaltung ist die programmierbare elektronische Speichereinrichtung ein EEPROM. Dieses ermöglicht eine nicht-flüchtige Speicherung der Daten und ein einfaches Einschreiben bzw. Überschreiben eingeschriebener Daten bei der Produktion oder bei der Anwendung.

Gemäß einer Ausgestaltung ist die programmierbare elektronische Speichereinrichtung zwischen der Kontaktleiste und einer Gehäusewand des Werkzeuges angeordnet. Hierdurch wird einfach eine geschützte Unterbringung der Speichereinrichtung ermöglicht.

Gemäß einer Ausgestaltung ist die programmierbare elektronische Speichereinrichtung mit einem Lack überdeckt. Hierdurch wird die Speichereinrichtung geschützt. Bei dem Lack kann es sich insbesondere um einen autoklavierbaren Lack handeln, so daß das gesamte Werkzeug autoklavierbar ist.

Gemäß einer Ausgestaltung weist die Einrichtung zum lösbaren Befestigen an der Dosiervorrichtung eine axiale Aufnahme und das Werkzeug einen Zapfen zum Einführen in die Aufnahme auf.

Die Einrichtung zum lösbaren Befestigen und das Werkzeug sind vorteilhaft so ausgestaltet, wie in der deutschen Patentanmeldung 102 47 731.0 beschrieben, deren Inhalt durch Bezugnahme einbezogen wird.

Gemäß einer Ausgestaltung sind die Federkontakte und die Kontaktleiste parallel zur Richtung des Zusammenfügens der Dosiervorrichtung und des Werkzeuges ausgerichtet. Durch die parallele Ausrichtung wird eine sichere Kontaktierung beim lösbaren Verbinden des Werkzeuges und der Dosiervorrichtung sichergestellt.

Gemäß einer Ausgestaltung sind produktionsbezogene und/oder anwendungsbezogene Daten im elektronischen Speicherelement speicherbar. Einbezogen in die Erfindung ist also die Speicherung ausschließlich produktionsbezogener oder die Speicherung ausschließlich anwendungsbezogener oder die Speicherung produktionsbezogener und anwendungsbezogener Daten.

Bei dem erfindungsgemäßen Verfahren zum Betreiben eines Dosiersystems mit mindestens einem Werkzeug und einer Dosiervorrichtung
- werden während der Produktion produktionsbezogene Daten und/oder während der Anwendung anwendungsbezogene Daten in einer programmierbaren elektronischen Speichereinrichtung des Werkzeugs gespeichert,
- werden bei der Anwendung die produktionsbezogenen und/oder anwendungsbezogenen Daten aus der programmierbaren elektronischen Speichereinrichtung ausgelesen und einer von der Dosiervorrichtung umfaßten Einrichtung zum Steuern zugeführt und
- steuert die Einrichtung zum Steuern eine von der Dosiervorrichtung umfaßte Einrichtung zum Betätigen des Werkzeugs und/oder eine von der Dosiervorrichtung umfaßte Einrichtung zum lösbaren Befestigen des Werkzeuges an der Dosiervorrichtung in Abhängigkeit von den produktionsbezogenen und/oder von den anwendungsbezogenen Daten.

Gemäß einer Ausgestaltung sind die produktionsbezogenen Daten und/oder die anwendungsbezogenen Daten Kalibrierdaten und/oder mechanische Korrekturdaten. Die Kalibrierdaten und/oder die mechanischen Korrekturdaten sind insbesondere zur genauen Steuerung von Dosiermengen und/oder von Gerätefunktionen verwendet.

Gemäß einer Ausgestaltung werden die produktionsbezogenen und/oder die anwendungsbezogenen Daten mittels eines vom Dosiersystem getrennten elektronischen Datenverarbeitungssystems in die programmierbare elektronische Speichereinrichtung eingeschrieben. Hierbei handelt es sich z. B. um einen im Produktions- oder Laborbereich eingesetzten PC.

Gemäß einer Ausgestaltung werden die produktionsbezogenen und/oder die anwendungsbezogenen Daten mittels der Einrichtung zum Steuern und/oder einer vom Dosiersystem umfaßten elektronischen Datenverarbeitungseinrichtung in die programmierbare elektronische Speichereinrichtung eingeschrieben und/oder aus dieser ausgelesen. Die Einrichtung zum Steuern und/oder die elektronische Datenverarbeitungseinrichtung ist z. B. ein Mikrocomputer.

Gemäß einer Ausgestaltung erfolgt das Einschreiben oder Auslesen der produktionsbezogenen und/oder anwendungsbezogenen Daten in die oder aus der programmierbaren elektronischen Speichereinrichtung über eine Einrichtung zum Kontaktieren der Dosiervorrichtung und eine damit kontaktierend verbundene weitere Einrichtung zum Kontaktieren, die mit der vom Dosiersystem getrennten oder der vom Dosiersystem umfaßten Datenverarbeitungseinrichtung und/oder der Einrichtung zum Steuern verbunden ist.

Die Erfindung wird nachfolgend anhand der anliegenden Zeichnung eines Ausführungsbeispieles näher erläutert. In der Zeichnung zeigen:
- Fig. 1: ein Werkzeug in einer Unteransicht;
- Fig. 2: das Werkzeug eingesetzt in einen Werkzeughalter eines Laborautomaten in einem vertikalen Teilschnitt;
- Fig. 3: das Werkzeug eingesetzt in den Werkzeughalter in einer teilweisen Seitenansicht;
- Fig. 4: vergrößertes Detail IV der Fig. 3.

Das in der Zeichnung dargestellte Dosierwerkzeug und der Werkzeughalter entsprechen im wesentlichen dem anhand der Fign. 4 bis 6 erläuterten Dosierwerkzeug und dem anhand der Fign. 7 und 10 erläuterten Werkzeughalter eines Laborautomaten gemäß deutscher Patentanmeldung 102 47 731.0, die auch insoweit durch Bezugnahme einbezogen wird.

Das Dosierwerkzeug 1 weist ein Unterteil 2 mit einer Basisplatte 3 auf, von der nach unten - in der Zeichnung nicht sichtbar - ein Zylinder und ein damit verbundener Aufsteckkonus für eine Pipettenspitze vorsteht. In dem Zylinder ist - ebenfalls nicht sichtbar - ein Kolben axial verschieblich geführt. Um die Kolben-Zylinderanordnung erstreckt sich eine Abwerferhülse 4, die von oben betätigbar ist, um eine Pipettenspitze von dem Konus abzudrücken.

Oben auf der Basisplatte 3 ist eine im wesentlichen streifenförmige Befestigungsplatte 5 fixiert.

Oben auf der Befestigungsplatte 5 ist ein Oberteil 6 angeordnet, das einen hohlen Befestigungszapfen 7 aufweist. Dieser hat einen oberen zylindrischen Abschnitt 7', der am Außenumfang zwei Klauen 8', 8" trägt, um einen Bajonett-Verschlußteil zu bilden. Die Klausen 8', 8" haben eine leichte Gewindesteigung zum Verspannen einer Bajonett-Verbindung.

Ferner hat der Zapfen 7 einen mittleren zylindrischen Abschnitt 7" mit einem größeren Außendurchmesser als der obere zylindrische Abschnitt 7' und einen nach unten sich konisch erweiternden unteren Abschnitt 7"'.

Aus dem Zapfen 7 ragt oben ein Mitnehmer 9 heraus, der drehfest mit einer - nicht dargestellten - Gewindespindel verbunden ist, die innerhalb des Dosierwerkzeuges 1 in einer Gewindemutter verdrehbar ist, die an radialen Vorsprüngen in längsgerichteten Nuten innerhalb des Dosierwerkzeuges 1 verlagerbar ist. Die Gewindemutter ist mit dem Kolben verbunden.

Durch Drehen des Mitnehmers 9 ist folglich der Kolben innerhalb des Zylinders verlagerbar. Hierdurch ist eine Luftsäule verschiebbar, um Flüssigkeit in eine Pipettenspitze auf dem Aufsteckkonus einzusaugen oder herauszudrücken.

Aus dem Befestigungszapfen 7 ragt oben ein axial gerichteter Zylinderstift 10 heraus, der mit der Gewindemutter verbunden ist, um deren Lage und damit die Lage des Kolbens im Zylinder zu indizieren.

Auf der Seite der Befestigungsplatte 5 ist eine Kontaktleiste 11 in Form einer Platine befestigt, die auf der Außenseite mehrere Kontakte 12 aufweist, die von Leiterbahnen gebildet werden. Diese sind mit Gold beschichtet. Unterhalb der Kontaktleiste 11 hat die Befestigungsplatte 5 eine Ausnehmung 13. Darin ist ein auf der Innenseite der Platine 11 befestigtes EEPROM angeordnet.

Einige oder alle Kontakte 12 der Kontaktleiste 11 sind mit einem Kontaktfüßchen des EEPROMs elektrisch verbunden.

Der Werkzeughalter 15 hat ein Basisteil 16, das unten eine zylindrische Aufnahme 17 aufweist. Darin ist der Dosierkopf 1 mit einem Befestigungszapfen 7 einsetzbar. Die Aufnahme 17 ist entsprechend konturiert.

Innerhalb des Basisteils 16 ist ein Antriebsritzel 18 angeordnet, das mit der Welle eines nicht dargestellten elektrischen Antriebsmotors verbunden ist, um einen ebenfalls nicht dargestellten Bajonett-Verschlußring anzutreiben, der mit dem Befestigungszapfen 7 verbindbar ist. Auch der Antrieb für den Mitnehmer 9 und der Sensor zum Abtasten des Zylinderstiftes 10 sind nicht dargestellt.

An der Unterseite des Unterteils 16 ist in axialer Ausrichtung eine Federkontaktleiste 19 mit vergoldeten Federkontakten 20 montiert. Hierfür ist an der Seite des Unterteils 16 eine Befestigungsplatte 21 angebracht. Die Federkontaktleiste 19 ist einer nicht dargestellten elektronischen Einrichtung zum Steuern des Laborautomaten verbunden. Dabei handelt es sich beispielsweise um einen Microcontroller oder einen PC.

Wenn das Dosierwerkzeug 1 in den Werkzeughalter 15 eingesetzt und mittels des Bajonettverschlusses lösbar mit diesem verbunden ist, kontaktiert die Federkontaktleiste 19 die Kontaktleiste 11. Die im EEPROM gespeicherten Daten sind dann von der elektronischen Einrichtung zum Steuern auslesbar. Ausgelesene Kalibrierdaten bzw. mechanische Toleranzen betreffende Daten können von der elektronischen Einrichtung bei der Steuerung von Dosiervorgängen bzw. beim Verfahren des Werkzeughalters 15 berücksichtigt werden.

## Patentansprüche

1. Dosiersystem mit
- mindestens einem Werkzeug (1) mit einem Zapfen (7),
- eine am Werkzeug (1) angeordnete programmierbare elektronische Speichereinrichtung (14),
- einer Dosiervorrichtung (15) mit einer Einrichtung zum lösbaren Befestigen des Werkzeuges, die eine axiale Aufnahme (17) zum Einführen des Zapfens (7) aufweist, einer Einrichtung zum Betätigen des Werkzeuges (1) und einer Einrichtung zum Steuern der Einrichtung zum Betätigen des Werkzeuges (1) und/oder der Einrichtung zum lösbaren Befestigen, und
- einer mit der Einrichtung zum Steuern verbundenen, an der Dosiervorrichtung (15) angeordneten Einrichtung zum Kontaktieren (19) und einer am Werkzeug (1) angeordneten weiteren Einrichtung zum Kontaktieren (12), die mit der programmierbaren elektronischen Speichereinrichtung (14) verbunden ist, wobei die Einrichtung zum Kontaktieren (19) eine Federkontaktleiste und die weitere Einrichtung zum Kontaktieren eine Kontaktleiste (11) ist oder umgekehrt, die Federkontakte (19) und die Kontaktleiste (11) parallel zur Richtung des Zusammenftlgens der Dosiervorrichtung (15) und des Werkzeuges (1) ausgerichtet sind und die Einrichtung zum Kontaktieren (19) und die weitere Einrichtung zum Kontaktieren (11) bei lösbar an der Dosiervorrichtung (15) befestigtem Werkzeug (1) einander kontaktieren.

2. Dosiersystem nach Anspruch 1, bei dem die Dosiervorrichtung (15) eine Pipette und/oder ein Dispenser oder eine Dosierstation oder ein Laborautomat ist und/oder bei dem mindestens ein Werkzeug (1) eine Pipettenspitze und/oder eine Spritze und/oder ein Dosierkopf und/oder ein anderes Dosierwerkzeug und/oder ein Greifwerkzeug ist.

3. Dosiersystem nach Anspruch 1 oder 2, bei dem die Einrichtung zum Kontaktieren (19) und die weitere Einrichtung zum Kontaktieren (11) zusätzlich zu Kontakten für eine Datenübertragung Kontakte für eine Stromversorgung aufweisen.

4. Dosiersystem nach einem der Ansprüche 1 bis 3, bei dem die programmierbare elektronische Speichereinrichtung (14) ein EEPROM ist.

5. Dosiersystem nach einem der Ansprüche 1 bis 4, bei dem die programmierbare elektronische Speichereinrichtung (14) zwischen der Kontaktleiste (11) und einer Gehäusewand (5) des Werkzeuges (1) angeordnet ist.

6. Dosiersystem nach einem der Ansprüche 1 bis 5, bei dem die programmierbare elektronische Speichereinrichtung (14) mit einem Lack überdeckt ist.

7. Dosiersystem nach einem der Ansprüche 1 bis 6, bei dem produk-tionsbezogene und/oder anwendungsbezogene Daten in der programmierbaren elektronischen Speichereinrichtung (14) speicherbar sind.

8. Verfahren zum Betreiben eines Dosiersystems mit mindestens einem Werkzeug und einer Dosiervorrichtung, insbesondere nach einem der Ansprüche 1 bis 7, bei dem
- während der Produktion produktionsbezogene Daten und/oder während der Anwendung anwendungsbezogene Daten in einer programmierbaren elektronischen Speichereinrichtung des Werkzeugs gespeichert werden,
- bei der Anwendung die produktionsbezogenen und/oder anwendungbezogenen Daten aus der programmierbaren elektronischen Speichereinrichtung ausgelesen und einer von der Dosiervorrichtung umfaßten Einrichtung zum Steuern zugeführt werden
- das Einschreiben und/oder Auslesen der produktionsbezogenen und/oder anwendungsbezogenen Daten in die oder aus der programmierbaren elektronischen Speichereinrichtung über eine Einrichtung zum Kontaktieren der Dosiervorrichtung, die mit der Einrichtung zum Steuern verbunden ist, und eine damit kontaktierend verbundene weitere Einrichtung zum Kontaktieren, die mit der elektronischen Speichereinrichtung verbunden ist, erfolgt,
- das Werkzeug unter gleichzeitiger kontaktierender Verbindung der weiteren Einrichtung zum Kontaktieren mit der Einrichtung zum Kontaktieren mit der Dosiereinrichtung verbindbar ist und die Verbindung von Werkzeug und Dosiervorrichtung unter gleichzeitiger Aufhebung der kontaktierenden Verbindung trennbar ist, und
- die Einrichtung zum Steuern eine von der Dosiervorrichtung umfaßte Einrichtung zum Betätigen des Werkzeugs und/oder eine von der Dosiervorrichtung umfaßte Einrichtung zum lösbaren Befestigen des Werkzeuges an der Dosiervorrichtung in Abhängigkeit von den produktionsbezogenen und/oder von den anwendungsbezogenen Daten steuert.

9. Verfahren nach Anspruch 8, bei dem die produktionsbezogenen Daten und/oder die anwendungsbezogenen Daten Kalibrierdaten und/oder mechanische Korrekturdaten sind.

10. Verfahren nach Anspruch 8 oder 9, bei dem die produktionsbezogenen oder die anwendungsbezogenen Daten mittels eines vom Dosiersystem getrennten elektronischen Datenverarbeitungssystems in die programmierbare elektronische Speichereimichtung eingeschrieben werden.

11. Verfahren nach einem der Ansprüche 8 bis 10, bei dem die produktionsbezogenen und/oder die anwendungsbezogenen Daten mittels der Einrichtung zum Steuern und/oder einer vom Dosiersystem umfaßten elektronischen Datenverarbeitungseinrichtung in die programmierbare elektronische Speichereinrichtung eingeschrieben und/oder aus dieser ausgelesen werden.

## Claims

1. A proportioning system, comprising:
- at least one tool (1) with a spigot (7),
- a programmable electronic storage device (14) disposed on the tool (1),
- a proportioning device (15) including a device for releasably mounting the tool, said device having an axial receptacle (17) for receiving the spigot (7), a device for actuating the tool (1), and a device for controlling the device for actuating the tool and/or device for releasably mounting it, and
- a device for contacting (19) connected to the device for controlling and disposed on the proportioning device (15) and another device for contacting (12) disposed on the tool (1) that is connected to the programmable electronic storage device (14) wherein the device for contacting (19) is a spring-loaded contact strip and the other device for contacting is a contact strip (11), or vice versa, the spring contacts (19) and the contact strip (11) are oriented in parallel with the direction of assembly for the proportioning device (15) and the tool (1), and the device for contacting (19) and the other device for contacting (11) contact each other when the tool (1) is releasably mounted on the proportioning device (15).

2. The proportioning system according to claim 1 wherein the proportioning device (15) is a pipette and/or dispenser or proportioning station or laboratory-type automatic apparatus and/or wherein at least one tool (1) is a pipette tip and/or syringe and/or proportioning head and/or another proportioning tool and/or prehensile tool.

3. The proportioning system according to claim 1 or 2, wherein the device for contacting (19) and the other device for contacting (11), in addition to having contacts for a data transfer, have contacts for a power supply.

4. The proportioning system according to any one of claims 1 to 3, wherein the programmable electronic storage device (14) is an EEPROM.

5. The proportioning system according to any one of claims 1 to 4, wherein the programmable electronic storage device (14) is disposed between the contact strip (11) and a casing wall (5) of the tool (1).

6. The proportioning system according to any one of claims 1 to 5, wherein the programmable electronic storage device (14) is coated with a varnish.

7. The proportioning system according to any one of claims 1 to 6, wherein production-related and/or application-related data can be stored in the programmable electronic storage device (14).

8. A process for operating a proportioning system using at least one tool and a proportioning device, specifically according to any one of claims 1 to 7, wherein
- production-related data is stored during production and/or application-related data is stored during application in a programmable electronic storage device of the tool,
- the production-related data and/or application-related data is read from the programmable electronic storage device and is supplied to a device for controlling comprised in the proportioning device during application,
- the production-related and/or application-related data are written into or read from the programmable electronic storage device via a device for contacting the proportioning device, said device for contacting being connected to the device for controlling, and via another contacting device, which is connected contactingly to the device for contacting and which is connected to the electronic storage device,
- the tool can be connected to the proportioning device, at the same time the device for contacting being connected to the other device for contacting and contacting it, and the connection of the tool and the proportioning device can be released, at the same time releasing the contacting connection, and
- the device for controlling controls a device comprised in the proportioning device for actuating the tool and/or a device comprised in the proportioning device for releasably mounting the tool on the proportioning device in dependence on the production-related data and/or application-related data.

9. The process according to claim 8, wherein the production-related data and/or application-related data are calibration data and/or mechanical correction data.

10. The process according to claim 8 or 9, wherein the production-related or application-related data are written into the programmable electronic storage device by means of an electronic data processing system separated from the proportioning system.

11. The process according to any one of claims 8 to 10, wherein the production-related and/or application-related data are written into the programmable electronic storage device or are read therefrom by means of the device for controlling and/or an electronic data processing device comprised in the proportioning system.

## Revendications

1. Système de dosage, comprenant :
- au moins un instrument (1) avec une bonde (7),
- un dispositif de mémoire électronique programmable (14) disposé sur l'instrument (1),
- un appareil de dosage (15) avec un dispositif pour la fixation amovible de l'instrument et présentant un logement axial (17) pour introduire la bonde (7), un dispositif pour actionner l'instrument (1) et un dispositif pour commander le dispositif d'actionnement de l'instrument (1) et/ou le dispositif de fixation amovible, et
- un dispositif d'établissement de contact (19), relié au dispositif de commande et disposé sur l'appareil de dosage (15), et un autre dispositif d'établissement de contact (12) disposé sur l'instrument (1) et relié au dispositif de mémoire électronique programmable (14), dans lequel le dispositif d'établissement de contact (19) est une réglette de contacts à ressort et l'autre dispositif d'établissement de contact est une réglette de contacts (11), ou vice versa, les contacts à ressort (19) et la réglette de contacts (11) étant alignés parallèlement à la direction de l'assemblage de l'appareil de dosage (15) et de l'instrument (1), et le dispositif d'établissement de contact (19) et l'autre dispositif d'établissement de contact (11) entrant en contact lorsque l'instrument (1) est fixé de façon amovible à l'appareil de dosage (15).

2. Système de dosage selon la revendication 1, dans lequel l'appareil de dosage (15) est une pipette et/ou un distributeur ou une station de dosage ou un robot de laboratoire et/ou dans lequel au moins un instrument (1) est un cône de pipette et/ou une seringue et/ou une tête de dosage et/ou un autre instrument de dosage et/ou un instrument de préhension.

3. Système de dosage selon la revendication 1 ou 2, dans lequel le dispositif d'établissement de contact (19) et l'autre dispositif d'établissement de contact (11) présentent en plus des contacts pour une transmission de données des contacts pour une alimentation électrique.

4. Système de dosage selon l'une quelconque des revendications 1 à 3, dans lequel le dispositif de mémoire électronique programmable (14) est une EEPROM.

5. Système de dosage selon l'une quelconque des revendications 1 à 4, dans lequel le dispositif de mémoire électronique programmable (14) est disposé entre la réglette de contacts (11) et une paroi de boîtier (5) de l'instrument (1).

6. Système de dosage selon l'une quelconque des revendications 1 à 5, dans lequel le dispositif de mémoire électronique programmable (14) est recouvert d'un vernis.

7. Système de dosage selon l'une quelconque des revendications 1 à 6, dans lequel des données concernant la production et/ou concernant l'application peuvent être mémorisées dans le dispositif de mémoire électronique programmable (14).

8. Procédé d'utilisation d'un système de dosage, comprenant au moins un instrument et un appareil de dosage, en particulier selon l'une quelconque des revendications 1 à 7, dans lequel
- pendant la production, des données concernant la production et/ou pendant l'application, des données concernant l'application sont mémorisées dans un dispositif de mémoire électronique programmable de l'instrument,
- lors de l'application, les données concernant la production et/ou concernant l'application sont lues à partir du dispositif de mémoire électronique programmable et amenées à un dispositif de commande compris dans l'appareil de dosage,
- l'écriture et/ou la lecture des données concernant la production et/ou concernant l'application dans le/ à partir du dispositif de mémoire électronique programmable s'effectuent par l'intermédiaire d'un dispositif d'établissement de contact de l'appareil de dosage, qui est relié au dispositif de commande, et d'un autre dispositif d'établissement de contact, relié en contact avec celui-ci, qui est relié au dispositif de mémoire électronique,
- l'instrument peut être relié à l'appareil de dosage, avec une connexion de contact simultanée entre l'autre dispositif d'établissement de contact et le dispositif d'établissement de contact, et la connexion de l'instrument et de l'appareil de dosage peut être coupée en supprimant simultanément la connexion de contact, et
- le dispositif de commande commande un dispositif, compris dans l'appareil de dosage, pour l'actionnement de l'instrument et/ou un dispositif, compris dans l'appareil de dosage, pour la fixation amovible de l'instrument à l'appareil de dosage, en fonction des données concernant la production et/ou concernant l'application.

9. Procédé selon la revendication 8, dans lequel les données concernant la production et/ou les données concernant l'application sont des données de calibrage et/ou des données de correction mécanique.

10. Procédé selon la revendication 8 ou 9, dans lequel les données concernant la production ou concernant l'application sont inscrites dans le dispositif de mémoire électronique programmable au moyen d'un système de traitement de données électronique, séparé du système de dosage.

11. Procédé selon l'une quelconque des revendications 8 à 10, dans lequel les données concernant la production et/ou concernant l'application sont inscrites au moyen du dispositif de commande et/ou d'un dispositif de traitement de données électronique compris dans le système de dosage dans le dispositif de mémoire électronique programmable et/ou lues à partir de celui-ci.
